# EUROPÄISCHE PATENTANMELDUNG

(11) **EP 0 952 053 A2**
(43) Veröffentlichungstag der Anmeldung: **27.10.1999**
(21) Anmeldenummer: 99105026.1
(22) Anmeldetag: 16.03.1999
(51) Int. Cl.: B60S 1/04

(54) **Vorrichtung zur Befestigung einer Wischanlage an einem Fahrzeug**

(30) Priorität: 25.04.1998 DE 19818581
(71) Anmelder: ITT MANUFACTURING ENTERPRISES, INC., Wilmington, Delaware 19801 (US)
(72) Erfinder: Egner-Walter, Bruno, 74076 Heilbronn (DE)
(74) Vertreter: Dreiss, Fuhlendorf, Steimle & Becker

(57) **Zusammenfassung**

Zur schwingungsentkoppelten Befestigung einer Scheiben-Wischanlage eines Fahrzeugs an dessen Karosserie (1) ist letztere oder ein daran angebrachter Halter (2) an jeder Befestigungsstelle für die Wischanlage mit einem Befestigungsdurchbruch (4) ausgestattet. Dort wird die erfindungsgemäße Befestigungsvorrichtung (3) anmontiert.

Ein wesentliches Element ist eine Muffe (8), die an einem Befestigungsfortsatz, beispielsweise an dem Wischerlager (5) der Scheibenwischeranlage angebracht, insbesondere dort eingesprengt ist. In diese ist eine Bundbuchse (11) eingeschoben, welche ein bolzenartiges Befestigungselement (16) aufnehmen kann.

Am in Einsteckrichtung inneren Ende der Bundbuchse (11) sind Halteglieder (14, 24) angebracht, die federelastisch verbiegbar sind und deren freie Enden Verriegelungsglieder (15, 27) bilden oder tragen. Letztere untergreifen den Halter (2) im Bereich des Befestigungsdurchbruchs (4).

## Beschreibung

Die Erfindung bezieht sich auf eine Vorrichtung zur Befestigung einer Wischanlage an der Karosserie eines Fahrzeugs, insbesondere Kraftfahrzeugs, wobei die Wischanlage mindestens eine reversierend antreibbare Wischerwelle zur Befestigung eines Wischarms mit Wischerblatt aufweist, gemäß dem Oberbegriff des Anspruchs 1.

Bei einer bekannten Vorrichtung dieser Art (DE 40 36 367 A1) wird die Wischanlage an drei verschiedenen Stellen der Karosserie des Kraftfahrzeugs befestigt. Jede vorgesehene Befestigungsstelle ist mit einer Gewinde-Befestigungsbohrung versehen, in welche ein durch eine Schraube gebildetes bolzenartiges Befestigungselement eingeschraubt wird. Diese Art der Befestigung ist material- und zeitaufwendig und dadurch teuer. So muß beispielsweise auch an der Schraubenkopfseite der Vorrichtung eine zweite metallene Buchse vorgesehen werden. Außerdem ist das Aufschrauben einer Mutter ein teurer Arbeitsgang. Während des Aufschraubens muß nämlich die gesamte Vorrichtung ständig an den drei Befestigungsstellen festgehalten werden, damit das Bolzengewinde genügend weit vorsteht und beim Auschrauben der Mutter nicht beschädigt wird.

Der Vorteil der bekannten Vorrichtung liegt in der Schwingungsentkopplung, die man durch die Muffe aus gummielastischem Material erzielt, welche zwischen der Wischanlage und der Karosserie wirksam ist.

Es liegt infolgedessen die Aufgabe vor, eine Vorrichtung gemäß dem Oberbegriff des Anspruchs 1 so weiterzubilden, daß unter Beibehaltung des erwähnten Vorteils die Montage einfacher, schneller und dadurch preiswerter wird.

Zur Lösung dieser Aufgabe wird erfindungsgemäß vorgeschlagen, daß eine Vorrichtung mit den Oberbegriffsmerkmalen gemäß den Merkmalen des kennzeichnenden Teils weitergebildet ist. Diese Vorrichtung macht nicht nur die Verwendung einer Schraube und Mutter entbehrlich, sondern auch der erwähnten zweiten Bundbuchse. Trotzdem ermöglicht sie ein schwingungsentkoppeltes Befestigen an der Fahrzeugkarosserie. Anstelle einer Schraube bzw. deren Schaft kann ein einfaches bolzenartiges Befestigungselement Verwendung finden. In besonderer Ausgestaltung der Erfindung kann man das bolzenartige Befestigungselement, wie nachstehend noch näher erläutert wird, weiterbilden.

Besondere Bedeutung dieser Vorrichtung haben die im Anspruch 1 aufgeführten verschwenkbaren zungenartigen Halteglieder, die vorteilhafterweise unmittelbar an die Bundbuchse angeformt sein können, was zu einer besonders kostengünstigen Fertigung führt. Allein durch die Dimensionierung ihres Querschnitts und entsprechende Materialwahl erreicht man ihre Querbeweglichkeit, die bei der Montage notwendig ist. Andererseits läßt sich aber die Vorrichtung und damit die gesamte Wischanlage, insbesondere mit Hilfe der zungenartigen Halteglieder, an der Karosserie oder einem damit verbundenen Halter rüttelfest halten, wobei wie gesagt die angestrebte Schwingungsentkopplung erhalten bleibt. Diese geht auf die Verwendung bzw. Beibehaltung der gummielastischen Muffe zurück. Sie kann, wie beim Stand der Technik, an die Wischanlage, insbesondere im Bereich eines Wischerlagers, schraubenlos anmontiert werden. Die Ausbildung des Befestigungsdurchbruchs richtet sich nach der Formgebung, insbesondere im Bereich der zungenartigen Halter. Zweckmäßigerweise ist es eine kreisrunde Bohrung, jedoch kann hiervon auch abgewichen werden, wenn aus irgendwelchen Gründen beispielsweise ein ovaler oder rechteckiger Durchbruch Vorteile bringt.

Eine Weiterbildung der Erfindung ergibt sich aus Anspruch 2. Sie bezieht sich vornehmlich auf das erste Ausführungsbeispiel dieser Erfindung. Die Halteglieder verlängern demnach den hülsenförmigen Teil der Bundbuchse, d. h. sie sind an dem vom Bund abgewandten Ende des hülsenförmigen Teils angebracht, insbesondere einstückig angeformt, so daß sie diesen hülsenförmigen Teil quasi verlängern. Wie nachstehend noch näher erläutert wird, können sie bei loser Bundbuchse entlang von verlängerten Mantellinien der letzteren verlaufen oder damit auch einen Winkel einschließen, wobei sie im letzteren Falle nach innen hin schräg angeordnet sind. Wichtig ist lediglich, daß sie bei anmontierter Vorrichtung eine Lage einnehmen, in welcher die radial vorstehenden Verriegelungsglieder der Halteglieder den Befestigungsdurchbruch von innen nach außen untergreifen und dadurch das Zurückziehen bzw. Lösen in dieser Richtung verhindern.

Gemäß einer weiteren Ausgestaltung der Erfindung handelt es sich bei den Haltegliedern um am Umfang des stirnseitigen Endes des hülsenförmigen Teils der Bundbuchse angebrachte, insbesondere angeformte, dort federelastisch verschwenkbare Zungen, die an ihrem freien Endbereich je ein widerhakenartiges, radial nach außen vorstehendes Verriegelungsglied tragen, das in bevorzugter Weise auch angeformt ist. Letzteres bedeutet, daß die Bundbuchse, die Halteglieder und die Verriegelungsglieder einstückig gefertigt werden können, was ganz besonders zur Verbilligung der gesamten Vorrichtung und auch zur Vereinfachung der Montage beiträgt.

Wenn hier davon die Rede ist, daß die Verrieglungsglieder "radial nach außen vorstehen", so bedeutet dies lediglich eine Bezugnahme auf die Halteglieder selbst und nicht auf den hülsenförmigen Teil der Bundbuchse. In losem Zustand können sich nämlich die Spitzen der widerhakenartigen Verriegelungsglieder durchaus innerhalb eines gedachten verlängerten Mantels des hülsenförmigen Teils befinden, so daß die Bundbuchse quasi ohne Widerstand an den Verriegelungsgliedern in die Muffe eingeschoben oder eingepreßt werden kann. Insoweit ist eine Ausgestaltung gemäß Anspruch 4 besonders vorteilhaft. Sie gilt im Übrigen für alle Ausführungsformen gemäß der beigefügten Zeichnung. Andererseits beschreibt dieser Anspruch auch eine Variante, bei welcher die Verriegelungsglieder bei loser Bundbuchse radial über den verlängerten Außenmantel des hülsenförmigen Teils teilweise oder vollständig vorstehen können, so daß sie beim Einpressen der Bundbuchse radial nach innen federn müssen, bis sie nach Durchtritt durch den Befestigungsdurchbruch aufgrund der Eigenelastizität radial nach außen gehen können und somit die Verriegelung bewirken, die dann durch das bolzenartige Befestigungselement lediglich noch zu sichern ist. Im ersteren Falle wird die Verriegelung zumindest teilweise durch das bolzenartige Befestigungselement bewirkt.

Eine andere Ausgestaltung dieser Vorrichtung, insbesondere gemäß dem zweiten Ausführungsbeispiel der Erfindung, beinhaltet Anspruch 5. Dabei sind die Halteglieder nicht unmittelbar am in Einschieberichtung unteren Ende des hülsenartigen Teils angeformt, sondern an einem daran angebrachten, insbesondere einstückig angeformten, käfigartigen Ansatz. Dies hat zur Folge, daß sie sich bei einer Montagerichtung von oben nach unten von unten nach oben hin erstrecken, während bei der anderen Variante die Halteglieder von oben nach unten weisen. Hinsichtlich der Wirkung und letztlich auch der Kosten besteht dabei aber kein erwähnenswerter Unterschied.

Weiterbildungen der Vorrichtung nach Anspruch 5 ergeben sich aus den Ansprüchen 6 und 7 sowie der nachfolgenden Beschreibung des betreffenden Ausführungsbeispiels.

Damit das bolzenartige Befestigungselement problemlos eingeschoben werden kann und es auch zu keiner Beschädigung beim ggf. erforderlichen Nachaußendrücken der schräg stehenden Halteglieder kommt, sieht eine Weiterbildung der Erfindung nach Anspruch 8 vor, daß das Einsteckende des bolzenartigen Befestigungselements konisch oder ballig ausgebildet ist.

Bei Wischanlagen ist es durchaus auch einmal notwendig, sie zu Reparaturzwecken oder auch zum Zwecke des Austauschs gegen eine neue Anlage von der Karosserie leicht und rasch abnehmen zu können. Beim Stand der Technik muß hierzu die Mutter abgeschraubt werden und es ist dabei meist notwendig, daß man während des Abschraubens die Wischanlage festhält.

Gemäß der Ausgestaltung nach Anspruch 9 ist die Demontage in allerkürzester Zeit möglich, wenn das bolzenartige Befestigungselement einen verdickten Kopf aufweist, der, insbesondere in einem konischen Abschnitt, in den Schaft des Bolzens übergeht. Dadurch entsteht rings um den Kopf des bolzenartigen Befestigungselements ein Spalt, unter den man mit einer Zange, einem Schraubendreher oder einem vergleichbaren Werkzeug greifen kann, das in jeder Werkstatt zur Verfügung steht. Allein durch Herausziehen des bolzenartigen Befestigungselements wird die Befestigungsvorrichtung für die Wischeranlage frei. Je nach Ausbildung im Bereich der Halteglieder hebt man sie einfach hoch oder zieht man sie mit geringem Kraftaufwand hoch, der notwendig ist, damit durch entsprechende Schrägen und Gegenschrägen die Verriegelungsglieder nach innen hin in eine Freigabestellung verschwenkt werden.

Damit sich der Bolzen nicht unbeabsichtigterweise löst, ist eine zweckmäßige Weiterbildung der Erfindung gemäß Anspruch 10 vorgesehen.

Die Erfindung wird nachstehend anhand der Zeichnung näher erläutert. Die Zeichnung zeigt zwei Ausführungsbeispiele der Erfindung. Hierbei stellen dar:
- Figur 1: in einem Vertikalschnitt die an die Karosserie bzw. einen Halter anmontierte Befestigungsvorrichtung vor der Sicherung durch das bolzenartige Befestigungselement; und
- Figur 2: in der rechten Bildhälte eine der Figur 1 entsprechende Darstellung einer zweiten Ausführungsform und in der linken Bildhälfte eine Darstellung mit dem bolzenartigen Befestigungselement in der Montageendstellung.

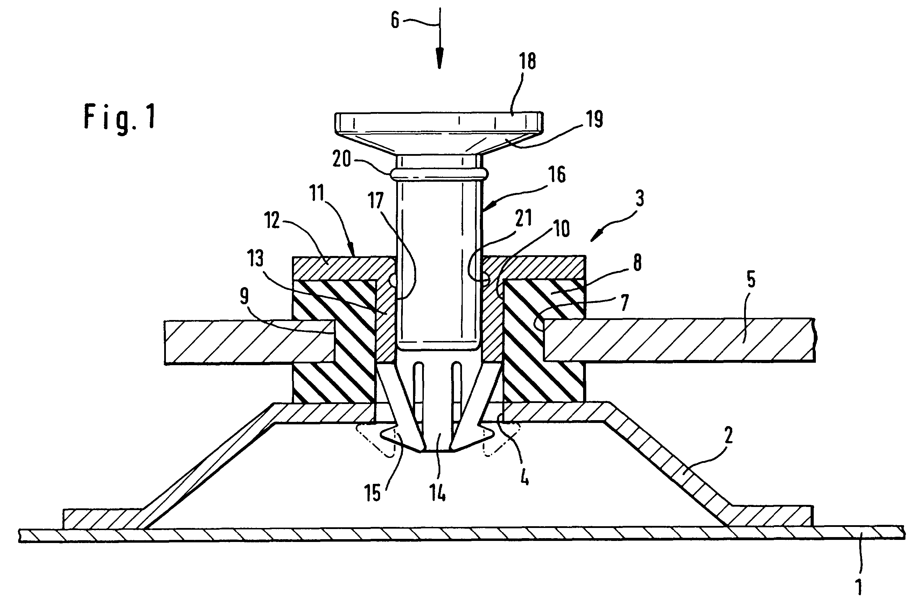

Beim ersten Ausführungsbeispiel gemäß Figur 1 ist an der Karosserie 1 eines Kraftfahrzeugs ein Halter 2 angebracht, beispielsweise durch Punktschweißung. Der Halter besitzt ein mittiges Loch, welches einen Befetigungsdurchbruch 4 zum Anmontieren der erfindungsgemäßen Befestigungsvorrichtung 3 für eine nicht dargestellte Wischanlage eines Kraftfahrzeugs bildet. Der Halter 2 kann auch entfallen. In diesem Falle ist dann der Befetigungsdurchbruch 4 unmittelbar an der Karosserie 1 vorhanden.

Wenn es sich um eine Scheibenwischanlage für die Frontscheibe eines Kraftfahrzeugs mit wenigstens einem Wischhebel handelt, so wird diese in der Regel mit wenigstens drei Befestigungsvorrichtungen 3 an drei Stellen der Karosserie 1 anmontiert, nämlich im Bereich der beiden Wischerwellen und in einem dritten Befestigungspunkt nahe dem Antriebsmotor für den Wischerantrieb. Insoweit wird auf die DE 40 36 367 A1 verwiesen.

Symbolisch ist in der Zeichnung bei beiden Ausführungsbeispielen ein Bauteil dargestellt, bei welchem es sich beispielsweise um einen Befestigungsfortsatz eines Wischerlagers 5 oder auch ein Motorblech handeln kann. An diesem Wischerlager 5 oder dergleichen ist die erfindungsgemäße Befestigungsvorrichtung 3 für die Wischanlage anmontiert. Im Falle von drei Befestigungsstellen sind es wie gesagt drei solche Vorrichtungen im seitlichen Abstand. Auf jeden Fall wird jede der Vorrichtungen, beispielsweise in Pfeilrichtung 6, auf die Karosserie 1 bzw. den Halter 2 im Bereich des Befetigungsdurchbruchs 4 aufgesetzt.

An einem Durchbruch 7 des Wischerlagers 5 oder dergleichen ist eine Muffe 8 anmontiert, inbesondere eingesprengt. Es handelt sich dabei um einen Hohlzylinder mit einer etwa mittig umlaufenden Außennut 9. In diese greift der Randbereich des Durchbruchs 7 ein. Sie besteht aus federelastischem Material, bespielsweise Gummi oder entsprechender Kunststoff. In die Bohrung 10 der Muffe 8 ist in Figur 1 von oben her eine Bundbuchse 11 eingeschoben oder leicht eingepreßt. Ihr radial nach außen vorstehender Bund 12 liegt oben auf der Muffe 8 auf und schließt nach außen hin mit der Muffe bündig ab. Der hülsenförmige Teil 13 der Bundbuchse 11 greift beim Ausführungsbeispiel bis etwa in einen mittigen Bereich der Muffe 8 ein. Der hülsenförmige Teil 13 der Bundbuchse 11 ist durch vorzugsweise einstückig angeformte, stegartige Halteglieder 14 verlängert. An den freien Enden der Halteglieder 14 befinden sich radial vorstehende Rastglieder 15, die gleichfalls einstückig hergestellt sind. Beim Ausführungsbeispiel verlaufen die Steg- oder zungenartigen Halteglieder, ausgehend vom hülsenförmigen Teil 13 der Bundbuchse 11, schräg radial nach innen hin und zwar derart, daß die Spitzen der widerhakenartigen Verrastglieder 15 über gedachte verlängerte Mantellinien des hülsenförmigen Teils 13 nicht vorstehen. Wenn man also diese Bundbuchse 11 mit den Haltegliedern und Verrieglungsgliedern in die Bohrung 10 der Muffe 8 einschiebt, so erfolgt dies nicht gegen den Widerstand der Verriegelungsglieder, sondern allenfalls beim Einpressen gegen den Reibwiderstand der aneinander anliegenden Zylinderflächen.

Damit die Verriegelungsglieder 15 ihre Aufgabe übernehmen können, nämlich ein Festhalten der Vorrichtung an der Karosserie 1 bzw. dem Halter 2 zu bewirken, wird ein bolzenartiges Befestigungselement 16 in Pfeilrichtung 6 in die Bohrung 17 der Bundbuchse 11 eingeschoben. Das Einsteckende kann ballig oder konisch ausgebildet sein, um das "Einfädeln" in die Bundbuchse zu erleichtern. Im Übrigen kann diese am Einsteckende auch mit einer Fase oder dergleichen Erweiterung versehen sein.

Wenn etwa die in Figur 1 gezeichnete Stellung erreicht ist und man eine Ausbildung mit bei losem Teil nach innen schräg gerichteten Haltegliedern verwendet, so drückt das bolzenartige Befestigungselement beim weiteren Einschieben die zungenartigen Halteglieder 14 nach außen, so daß die Verriegelungsglieder 15 die mit gestrichelten Linien gezeichnete Verrast-Endstellung erreichen, in welchen sie den Befestigungsdurchbruch 4 untergreifen. Damit ist dann die Wischanlage an diesem Punkt der Karosserie rüttelfest, aber federelastisch gelagert anmontiert.

Wenn, abweichend von der Darstellung in Figur 1, die zungenartigen Halteglieder 14 bei loser Bundbuchse 11 in Verlängerung von deren hülsenförmigem Teil 13 verlaufen, so müssen sie beim Einpressen der Bundbuchse 11 in die Muffe 8 federelastisch nach innen verschwenken, damit sie die aus Figur 1 ersichtliche "Zwischenlage" einnehmen. Sobald die Verriegelungsglieder 15 den Befetigungsdurchbruch 4 passiert haben, federn die Halteglieder 14 durch die zuvor aufgebrachte Federspannung federelastisch radial nach außen, so daß letztlich auch die mit gestrichelten Linien gezeigte Endlage der Verriegelungsglieder 15 erreicht ist.

Das bolzenartige Befestigungselement 16 besitzt einen verdickten Kopf 18 mit einem konischen Abschnitt 19. Wenn dieser oben auf der Außenseite des Bundes 12 der Bundbuchse 11 aufsitzt, so verbleibt noch ein ringförmiger, sich nach innen hin verjüngender Spaltraum zwischen dem Kopf 18 und dem Bund 12 übrig, in welchen man mit einem geeigneten Werkzeug, beispielsweise der Klinge eines Schraubendrehers, hineinfassen und durch eine entsprechende Bewegung den Kopf und damit das gesamte bolzenartige Befestigungselement 16 anheben kann. Die Demontage der erfindungsgemäßen Vorrichtung wird in dieser Weise vorgenommen.

Damit aber das bolzenartige Befestigungselement 16 sich nicht von selbst unerwünschterweise lösen kann, ist es knapp unterhalb seines Kopfes 18 mit einer umlaufenden Ringwulst 20 ausgestattet, die in der Montageendstellung des Befestigungselements 16 in eine ihrem Querschnitt entsprechende Ringnut 21 der Bundbuchse 11 einrastet. Durch entsprechende Materialwahl ist dies problemlos möglich.

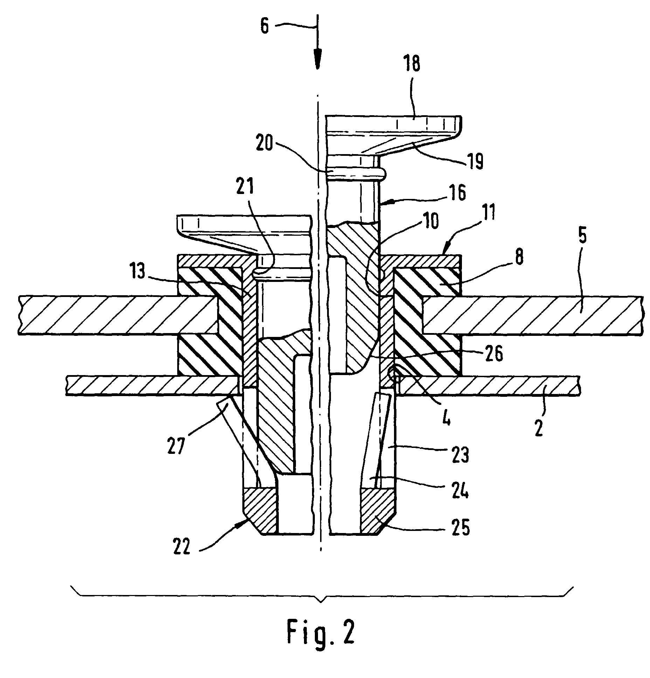

Bei der in Figur 2 dargestellten Variante der Erfindung ist der hülsenförmige Teil 13 der Bundbuchse 11 mittels eines käfigartigen Ansatzes 22 verlängert. Er besitzt Fenster 23, in welche je ein Halteglied 24 von innen nach außen eingreift. Die Halteglieder 24 sind innen an einem verdickten Endbereich 25 des käfigartigen Ansatzes 22 angebracht, vorzugsweise einstückig angeformt. Gemäß der rechten Bildhälfte der Figur 2 nehmen sie bei loser Bundbuchse eine Schräglage ein, aufgrund deren sie sich im Wesentlichen innerhalb des käfigartigen Ansatzes 22 befinden und nur ihr nach oben außen weisendes freies Ende in das jeweils zugeordnete Fenster 23 so weit eingreift, daß es nach außen hin nicht vorsteht. Dies ermöglicht das problemlose Einschieben oder Einpressen der Bundbuchse 11 mit ihrem Ansatz 22 in die Bohrung 10 der Muffe 8.

Selbst wenn sich die Bundbuchse 11 in ihrer völlig eingeschobenen Stellung befindet, ist die Vorrichtung mit dem Wischerlager 5 oder dergleichen Befestigungs-Vorsatz noch nicht verriegelnd verbunden. Dies geschieht erst durch Einschieben des zuvor gemäß der rechten Bildhälfte lediglich eingesteckten bolzenartigen Befestigungselements 16 in Pfeilrichtung 6. Das Einsteckende des beim Ausführungsbeispiel hohlgebohrten bolzenartigen Befestigungselements ist mit einem Konus 26 versehen, dessen Mantel etwa den gleichen Winkel einnimmt wie die Innenflächen der Halteglieder 24. Sobald der Konus 26 die Halteglieder 24 erreicht hat, drückt er sie über seinen Konus 26 in die Verriegelungs-Endstellung, die sich aus der linken Bildhälfte der Figur 2 ergibt. Gleichzeitig ist dann auch die Ringwulst 20 mit der Ringnut 21 der Bundbuchse 11 verrastet. Im Übrigen kann das bolzenartige Befestigungselement 16 aufgrund des ebenfalls vorhandenen konischen Abschnitts 19 in der vorstehend beschriebenen Weise ausgehoben werden.

Beim zweiten Ausführungsbeispiel bilden die freien hochragenden Enden der Halteglieder 24 Verriegelungsglieder 27. Im Übrigen sind die Halteglieder 24 einstückig mit dem käfigartigen Ansatz 22 und dem hülsenförmigen Teil 13 der Bundbuchse 11 gefertigt und so dimensioniert bzw. an ihrem unteren Ende ausgebildet, daß sie federelastisch umgebogen werden können. Sobald das bolzenartige Befestigungselement 16 zur Demontage der Wischanlage entgegen dem Pfeil 6 herausgezogen wird, nehmen die federelastischen Halteglieder 24 wieder ihre Ausgangsstellung gemäß der rechten Bildhälfte der Figur 2 ein, so daß die Bundbuchse 11 mit dem Ansatz 22 problemlos aus der Muffe 8 herausgezogen werden kann, zumindest aber die ganze Vorrichtung aus dem Halter 2 oder der Karosserie.

### Bezugszeichenliste

- 1: Karosserie
- 2: Halter
- 3: Befestigungsvorrichtung
- 4: Befestigungsdurchbruch
- 5: Wischerlager
- 6: Pfeilrichtung
- 7: Durchbruch
- 8: Muffe
- 9: Außennut
- 10: Bohrung
- 11: Bundbuchse
- 12: Bund
- 13: (hülsenförmiger) Teil
- 14: Halteglied
- 15: Verriegelungsglied
- 16: (bolzenartiges) Befestigungselement
- 17: Bohrung
- 18: Kopf
- 19: Abschnitt
- 20: Ringwulst
- 21: Ringnut
- 22: Ansatz
- 23: Fenster
- 24: Halteglied
- 25: Endbereich
- 26: Konus
- 27: Verriegelungsglied

## Patentansprüche

1. Vorrichtung zur Befestigung einer Wischanlage an der Karosserie (1) eines Fahrzeugs, insbesondere Kraftfahrzeugs, wobei die Wischanlage mindestens eine antreibbare Wischerwelle zur Befestigung eines Wischarms mit Wischerblatt aufweist und sie an zumindest einer Stelle mit einer Vorrichtung, vorzugsweise aber an zwei oder drei örtlich getrennten Stellen mittels jeweils einer Vorrichtung, befestigbar ist, wobei des weiteren die Karosserie (1) oder ein daran befestigter Halter (2) an der zumindest einen Befestigungsstelle einen Befestigungsdurchbruch (4) aufweist, der eine Muffe (8) der Vorrichtung aus gummielastischem Material aufnimmt, wobei in die Muffe (8) eine Bundbuchse (11) eingesteckt ist, in welche wiederum ein bolzenartiges Befestigungselement (16) der Vorrichtung einsteckbar ist, **dadurch gekennzeichnet**, daß die Bundbuchse (11) an ihrem in Einsteckrichtung (6) vorderen Endbereich verschwenkbare zungenartige Halteglieder (14, 24) aufweist, die bei montierter Vorrichtung und in Verriegelungsstellung eingeschobenem bolzenartigen Befestigungselement (16) mit ihrem freien Ende den Befestigungsdurchbruch (4) verriegelnd untergreifen.

2. Vorrichtung nach Anspruch 1, **dadurch gekennzeichnet**, daß die zungenartigen Halteglieder (14) zumindest bei anmontierter Vorrichtung etwa in Verlängerung des hülsenförmigen Teils der Bundbuchse (11) verlaufen und sie jeweils ein radial vorstehendes Verriegelungsglied (15) tragen, welches den Befestigungsdurchbruch (4) verriegelnd untergreift, wobei das bolzenartige Befestigungselement (16) wenigstens teilweise in den Bereich der Halteglieder (14) eingreift.

3. Vorrichtung nach Anspruch 2, **dadurch gekennzeichnet**, daß die Halteglieder (14) am Umfang des stirnseitigen Endes des hülsenförmigen Teils (13) der Bundbuchse (11) angebrachte, insbesondere angeformte, dort federelastisch verschwenkbare Zungen sind, die an ihrem freien Endbereich je ein widerhakenartiges, radial nach außen vorstehendes Verriegelungsglied (15) tragen.

4. Vorrichtung nach Anspruch 2, **dadurch gekennzeichnet**, daß die Verriegelungsglieder (15, 24) der losen Bundbuchse (11) deren hülsenförmigen Teil (13) nicht oder allenfalls unwesentlich radial überragen oder daß radial vorstehende Verriegelungsglieder (15, 27) beim Einschieben der Bundbuchse (11) in die Muffe (8) federelastisch nach innen hin ausweichen.

5. Vorrichtung nach Anspruch 1 oder 4, **dadurch gekennzeichnet**, daß der hülsenförmige Teil (13) der Bundbuchse (11) mittels eines käfigartigen Ansatzes (22) verlängert ist, an dem in Umfangsrichtung mehrere der zungenartigen Halteglieder (14) angebracht sind, die mit ihrem hülsenfernen Ende (25) federelastisch am Ansatz (22) angelenkt sind und deren freie Enden (27) zumindest bei eingeschobenem bolzenartigen Befestigungselement (16) den Befestigungsdurchbruch (4) der Karosserie (1) oder dergleichen von unten her untergreifen, wobei im montierten Zustand jedes Halteglied (14) mit seinem freien Endbereich ein Fenster (23) des Käfigs nach außen überragt und die freien Enden Verriegelungsglieder (27) bilden.

6. Vorrichtung nach Anspruch 5, dadurch gekennzeichnet, daß jedes Halteglied (24) am muffenfernen Ende seines Fensters (23) federelastisch verschwenkbar angelenkt ist und alle Halteglieder zusammen eine trichterförmige Aufnahme für das innere, daran anlegbare Ende (26) des bolzenartigen Befestigungselements (16) bilden.

7. Vorrichtung nach Anspruch 6, **dadurch gekennzeichnet**, daß bei loser Bundbuchse (11) oder beim Einschieben derselben in die Muffe (8) die freien Enden (27) der Halteglieder (24) radial nach außen hin vorstehen.

8. Vorrichtung nach wenigstens einem der Ansprüche 1 bis 7, **dadurch gekennzeichnet**, daß das Einsteckende des bolzenartigen Befestigungselements (16) konisch oder ballig ausgebildet ist.

9. Vorrichtung nach wenigstens einem der Ansprüche 1 bis 8, **dadurch gekennzeichnet**, daß das bolzenartige Befestigungselement (16) einen verdickten Kopf (18) aufweist, der insbesondere in einem konischen Abschnitt (19) in den Schaft des Bolzens übergeht.

10. Vorrichtung nach wenigstens einem der Ansprüche 1 bis 9, **dadurch gekennzeichnet**, daß sich am bolzenartigen Befestigungselement (16) bzw. Bolzenschaft eine umlaufende Ringwulst (20) befindet, die in der Montageendstellung in eine zugeordnete Ringnut (21) der Bundbuchse (11) eingerastet ist oder umgekehrt.
